# EUROPÄISCHE PATENTSCHRIFT

(11) **EP 3 111 742 B1**
(45) Veröffentlichungstag und Bekanntmachung des Hinweises auf die Patenterteilung: **29.05.2019**
(21) Anmeldenummer: 16001454.4
(22) Anmeldetag: 29.06.2016
(51) Int. Cl.: A01D 90/04, A01F 15/10

(54) **SCHNEIDVORRICHTUNG UND ERNTEMASCHINE**
CUTTING DEVICE AND HARVESTING MACHINE
DISPOSITIF DE COUPE ET MOISSONNEUSE

(30) Priorität: 03.07.2015 DE 102015008505
(43) Veröffentlichungstag der Anmeldung: 04.01.2017
(73) Patentinhaber: Maschinenfabrik Bernard Krone GmbH & Co. KG, 48480 Spelle (DE)
(72) Erfinder: Roters, Sebastian, 48624 Schöppingen (DE)

(56) Entgegenhaltungen:
- EP-A1- 2 659 763
- WO-A1-2014/129892
- DE-U1- 9 308 656
- US-A1- 2008 028 737

## Beschreibung

Die Erfindung betrifft eine Schneidvorrichtung für landwirtschaftliche Erntemaschinen, wie Ladewagen oder Ballenpressen zum Ernten von landwirtschaftlichem Halm- oder Blattgut gemäß dem Oberbegriff des Anspruchs 1 und eine damit ausgestattete Erntemaschine.

Landwirtschaftliche Ballenpressen oder Ladewagen sind oftmals mit einer Schneidvorrichtung - auch "Schneidwerk" genannt - für der Maschine zugeführtes Halm- und/oder Blattgut ausgestattet, um dieses zu unterschiedlichen Zwecken zu zerkleinern. Auch andere landwirtschaftliche Erntemaschinen können mit einer solchen Schneidvorrichtung ausgestattet sein.

Die Schneidvorrichtung ist dabei jeweils in einem vom Erntegut durchströmten Kanal der Erntemaschine so angeordnet, dass das Erntegut auf eine in den Kanal hineinragende Anzahl feststehender Messer zu gefördert wird, um in Kontakt mit deren Schneidkanten geschnitten zu werden. Im Fall von Ballenpressen und Ladewagen wird die Förderung des Ernteguts im Wirkungsbereich der Messer insbesondere durch einen Förder- und Schneidrotor bewirkt, der sich um eine quer zur Gutstromrichtung liegende Achse dreht und in Axialrichtung mit einer Vielzahl von Förderzinken ausgestattet ist. Die Förderzinken sind in der Regel leicht verdreht zueinander auf der Achse montiert, um eine weitestgehend kontinuierliche Förderung des Ernteguts sowie gleichmäßige Belastung des zugehörigen Antriebsstrangs zu erzielen.

In Bezug auf den durchströmten Erntegutkanal weisen derartige Schneidvorrichtungen eine Vielzahl in Reihe nebeneinander angeordneter Messer auf, wobei die Anzahl nebeneinander in den Erntegutkanal ragender Schneidmesser eine erzielbare Schnittlänge des Ernteguts vorgibt. Es ist allgemein wünschenswert, unterschiedliche Schneidmesseranzahlen verwenden zu können, um sich dem jeweiligen Einsatzzweck bzw. den Erntebedingungen anzupassen. Zum Schutz der Schneidmesser vor Beschädigungen durch Steine oder sonstige allgemein nicht zerkleinerbare Fremdkörper und zur Ermöglichung einer Auswahl einer gewünschten Schneidmesseranzahl ist es üblich, die Schneidmesser derart beweglich gegenüber einem Messerträger der Schneidvorrichtung zu lagern, dass sich jedes Schneidmesser zwischen zumindest einer Schneidposition und einer Außerbetriebsposition verstellen lässt. In der Schneidposition befindet sich das Schneidmesser dabei in einer Stellung, in der es so in den Erntegutkanal hineinragt, dass vorbeiströmendes Erntegut in Zusammenwirkung mit dem Schneidmesser zerkleinert wird. In der Außerbetriebsposition befindet sich das Schneidmesser dagegen in einer Stellung, in der es aus dem Erntegutkanal weitestgehend zurückgezogen ist, das Erntegut also nicht schneidet. Zum individuellen Spannen und Halten der Schneidmesser in den verschiedenen Betriebs- bzw. Außerbetriebspositionen dient eine aufwendige Stellmechanik, die unter anderem den einzelnen Schneidmessern zugeordnete Spanneinheiten sowie eine gemeinsame Stelleinrichtung umfasst. Schon angesichts der großen Anzahl heute verbauter Schneidmesser in Schneidvorrichtungen fällt bei derartigen Schneidvorrichtungen ein hoher Aufwand beim verschleißbedingten Schneidmesserwechsel an. Der für den Schneidmesserwechsel erforderliche Zugang zu den dicht unterhalb des Erntegutkanals angeordneten Schneidmessern ist in der Praxis schwierig. Insbesondere bei Ballenpressen sind die Platzverhältnisse in diesem Bereich sehr beengt.

Aus dem Stand der Technik ist unter anderen bereits aus dem Gebrauchsmuster DE 93 08 656 U1 eine Erntemaschine mit einer Schneidvorrichtung bekannt, bei der durch Herausfahren des oder der Messerträger in eine Lage seitlich neben der Erntemaschine die Zugänglichkeit der Schneidmesser in einfacher Weise ermöglicht wird.
Mittlerweile sind derartige schubladenartig mittels linearer Führungsmittel gelagerte Messerträger in verschiedenen Ausführungen aus der Praxis bekannt. Es kommen sowohl einteilige Messerträger vor, die komplett zu einer Maschinenseite herausgezogen werden können, als auch geteilte Ausführungen, bei denen jeweils eine Hälfte zur entsprechenden Maschineseite hin herausgezogen werden kann.
Für die Lagerung des Messerträgers kommen verschiedene Möglichkeiten in Betracht. Um den üblicherweise manuellen Kraftaufwand für die Verlagerung der sehr schweren Messerträger mit kompletter Schneidmesserbestückung möglichst gering zu halten, werden bevorzugt Rollenführungen eingesetzt. Große Führungslängen und Grenzen der Fertigungsgenauigkeit bedingen jedoch, dass die Führungen nachteilig ein relativ großes Führungsspiel aufweisen.
In Betriebsposition ist der Messerträger durch das Schneiden des Ernteguts großen, stoßartigen Belastungen ausgesetzt, daher sollte die Führung möglichst spielfrei sein. In Wartungsposition hingegen sollte der Messerträger leicht seitlich verschiebbar sein. Daher wäre hier eine feste Einspannung der Führung hinderlich.
Eine Lagerung mittels Rollen ist häufig der Stoßbelastung nicht gewachsen. Zudem ist es schwierig, aufgrund von Fertigungstoleranzen, den Messerträger im Tragrahmen zwischen vorderer und hinterer Führung spielfrei einzustellen. Je mehr Spiel zwischen vorderer und hinterer Lagerung vorhanden ist, desto mehr steigt die Stoßbelastung auf alle Komponenten. Die Lagerung in Gutflussrichtung mittels z.B. Gleitplatten zu realisieren, hat ebenfalls Nachteile. Hier ist es zwingend notwendig, einen Luftspalt einzustellen, um ein leichtgängiges Bewegen in Wartungsposition zu realisieren. Dies hat aber wiederum den oben beschriebenen Nachteil, dass die stoßartige Belastung auf alle Komponenten noch weiter steigt.

Es ist daher Aufgabe der vorliegenden Erfindung eine Schneidvorrichtung für Erntemaschinen, insbesondere Ballenpressen bereitzustellen, welche bei hoher Wartungsfreundlichkeit die Nachteile des Standes der Technik ausschließt und eine verbesserte Haltbarkeit und damit Verfügbarkeit bietet.
Die Aufgabe wird gelöst durch eine Schneidvorrichtung mit den Merkmalen des Anspruchs 1. Diese zeichnet sich dadurch aus, dass der linear verschiebbare Messerträger in seiner Betriebsstellung derart festgesetzt / fixiert werden kann, dass trotz vorhandenem, fertigungsbedingtem Spiel in den Linearführungen der Messerträger während des Schneidbetriebs keine Bewegung innerhalb des Führungsspiels ausführt. Die Erzielung dieser erfindungsgemäßen Wirkung ist mittels Fixiermitteln mit unterschiedlichen Wirkungsweisen möglich.
In einer Ausführung der Fixiereinrichtung ist denkbar, den Messerträger durch ausfahrbare konische Bolzen oder Keile, welche in entsprechende Gegenaufnahmen fahren, derart zu fixieren, dass die Führungsmittel im Rahmen des Lagerspiels voneinander abgehoben werden. Der Messerträger wird dann nur durch die Fixierelemente fest innerhalb der Schneidvorrichtung vibrationsfrei gehaltert. Die Lagerelemente sind entlastet und keinem Verschleiß durch Vibrationen und Schläge des Schneidbetriebs ausgesetzt. Grundsätzlich ist es unerheblich , ob die angetriebenen Fixierelemente an dem Messerträger und die Gegenaufnahmen an dem den Messerträger aufnehmenden Rahmen der Schneidvorrichtung angeordnet sind oder umgekehrt.
In einer besonders vorteilhaften Weiterbildung der Erfindung ist vorgesehen, die Betätigung der Fixiereinrichtung gleichzeitig mit einer anderen Schaltfunktion der Schneidvorrichtung zusammenzulegen. Die Überlegung dabei ist, dass die starken Belastungen auf den Messerträger nur dann angreifen, wenn wenigstens ein Schneidmesser in einer aktiven Schneidposition geschaltet ist. Somit ist es sinnvoll, die Fixiereinrichtung zumindest immer dann zu aktivieren, wenn wenigstens ein Schneidmesser aktiv geschaltet ist. Durch die vorteilhafte Zusammenlegung der zuvor genannten Funktionen werden zusätzliche Steuerfunktionen und Bauteile eingespart. Eine konstruktiv bevorzugte Ausführung verbindet die Fixierelemente mit dem Aktor für die Schneidmesserschaltung und spart so auch noch zusätzliche Antriebe ein.
Gemäß einer konstruktiv einfacheren, aber zu bevorzugenden Ausgestaltung einer Fixiervorrichtung wird erfindungsgemäß vorgeschlagen, den Messerträger durch Verspannen innerhalb der Linearführungen spielfrei zu fixieren. Das bedeutet, dass die Fixiereinrichtung nicht den Messerträger von der Führung abhebt und diese entlastet, sondern gegenteilig den Messerträger in einer Richtung fest gegen die Führung zieht oder drückt und so das Spiel ausschaltet und Bewegungen des Messerträgers innerhalb der Schneidvorrichtung unterbindet.

Auch bei dieser Ausführung bietet sich selbstverständlich die zuvor beschriebene kombinierte Aktivierung mit der Schneidmesserschaltung vorteilhaft an.

Die erfindungsgemäßen Lösungen zur Vermeidung von Verschleiß und Schäden an den Lagerungen von linear in eine Wartungsposition neben der Erntemaschine verbringbaren Messerträgern bringen nicht nur die bisher genannten Vorteile.
Durch die Anwendung einer Fixiereinrichtung nach der Erfindung ist es möglich, die Linearführungen mit wesentlich größerem Spiel und damit auch Fertigungstoleranzen auszuführen. Das bedeutet erhebliche Einsparungen bei der Fertigung und der Auswahl der Führungsmittel und eine leichtere Handhabung bei der Bedienung, da klemmende Führungen so ausgeschlossen werden können.
Die Anwendbarkeit der Erfindung ist nicht auf spezielle Ausführungen beschränkt. Es ist unerheblich, ob es sich bei den Führungen um Roll- oder um Gleitführungen handelt, wobei Rollführungen mit empfindlichen Kugellagern besonders von den erfindungsgemäßen Merkmalen profitieren.
Ebenfalls unerheblich ist, ob es sich um einen einteiligen Messerträger handelt, der komplett zu einer Seite der Maschine herausgezogen wird, oder ob der einteilige Messerträger zu beiden Seiten herausziehbar ist, oder ob es sich um einen geteilten Messerträger handelt.
Schneidvorrichtungen nach der Erfindung finden aufgrund der beengten Platzverhältnisse bevorzugt bei Ballenpressen Anwendung, sind jedoch auch zur Verwendung an Ladewagen und anderen Erntemaschinen beziehungsweise stationären Anlagen denkbar.

Die Erfindung wird im Folgenden unter Hinweis auf die beigefügten Figuren anhand eines bevorzugten Ausführungsbeispiels näher erläutert.
Es zeigen:
**Fig. 1****:** eine perspektivische Ansicht eines Erntegut Aufnahme- und Förderaggregats einer Erntemaschine mit einer erfindungsgemäßen Schneidvorrichtung;
**Fig. 2****:** eine schematische Teilansicht der Fig.1 von der Seite, wobei die Messerschaltung der Schneidvorrichtung nicht aktiviert ist;
**Fig. 3****:** eine schematische Teilansicht der Fig.1 von der Seite, wobei die Messerschaltung der Schneidvorrichtung aktiviert ist.

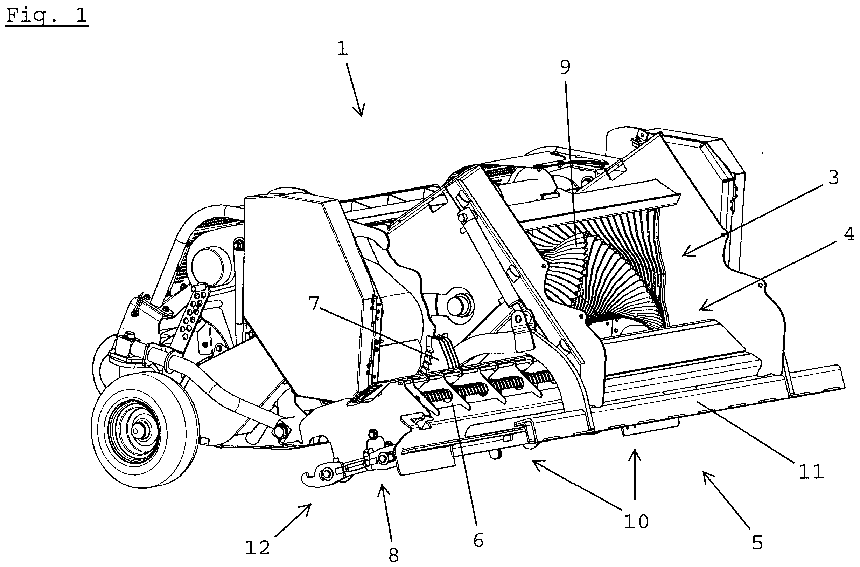

Fig. 1 zeigt ein komplettes Aufnahme- und Förderaggregat 1, so wie es als vormontagefähige Baueinheit in verschiedenen landwirtschaftlichen Erntemaschinen, insbesondere in Ballenpressen und Ladewagen Anwendung findet.
Die Baueinheit umfasst einen Gutaufnehmer 2 welcher als so genannte Pick-Up ausgebildet ist und das Erntegut vom Boden aufnimmt und es dem Förder- und Schneidrotor 3 zuführt. Das vom Förder- und Schneidrotor 3 erfasste Erntegut wird von diesem durch den Förderkanal 4 weitergefördert und entweder einer Presskammer einer Ballenpresse oder einem Laderaum eines Transportwagens zugeführt.
Unterhalb des Förder- und Schneidrotors 3 ist die Schneidvorrichtung 5 angeordnet, die einen Messerträger 6 aufweist, welcher die schwenkbar gelagerten Schneidmesser 7 aufnimmt. Wenn eine vorwählbare Anzahl von Schneidmessern 7 durch eine Stelleinrichtung 8 aktiv geschaltet sind, ragen sie in ihrer Schneidposition in den Förderkanal 4 hinein und zerteilen so im Zusammenwirken mit den Förderzinken 9 des Förder- und Schneidrotors 3 das, den Förderkanal 4 durchströmende Erntegut.
In Fig. 1 ist die Schneidposition einiger Schneidmesser 7 nur zur Demonstration gezeigt, denn wenn sich der Messerträger 6, wie hier dargestellt, in einer seitlich herausgezogenen Wartungsstellung befindet, sind die Schneidmesser 7 in der Praxis grundsätzlich inaktiv geschaltet und damit aus dem Förderkanal 4 herausgeschwenkt. Zur Verlagerung in die Wartungsstellung ist der Messerträger 6 durch Führungsmittel 10 schubladenartig linear verschiebbar in einem abklappbaren Tragrahmen 11 der Schneidvorrichtung 5 gelagert.

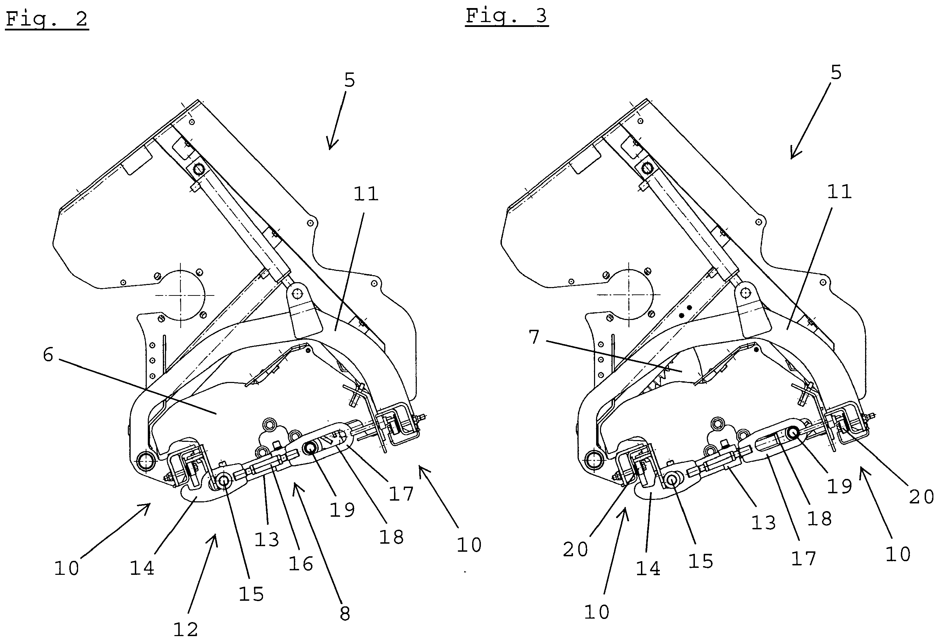

Die Fig. 2 und 3 stellen die Schneidvorrichtung 5 in einer Seitenansicht dar, um die Führungsmittel 10 und die Fixiereinrichtung 12 des Messerträgers 6 zu verdeutlichen.
Fig. 2 zeigt die Schneidvorrichtung 5 in der Außerbetriebsstellung der Schneidmesser 7, wobei der Aktor 13 der Stelleinrichtung 8, welcher im Aufführungsbeispiel als Hydraulikzylinder ausgeführt ist, sich im eingefahrenen Zustand befindet. Gleichzeitig ist damit die an diese Schaltfunktion gekoppelte Fixiereinrichtung 12 ebenfalls nicht aktiv.
Die Fixiereinrichtung 12 weist eine Klemmlasche 14 auf, welche auf dem verlängerten, am Messerträger 6 fest angeordneten Lagerbolzen 15 des Aktors 13 durch eine Langlochführung verschiebbar gelagert ist. Ein, zur Feinjustierung der Fixiereinrichtung 12, längenveränderliches Verbindungsglied 16 verbindet die Klemmlasche mit der Zuglasche 17. Die Zuglasche 17 ist ebenfalls mittels einer Langlochführung 18 auf einem weiteren Lagerbolzen 19 am Kolbenstangenende des Stellzylinders 13 der Stelleinrichtung 8 gehaltert und geführt.
In der in Fig. 2 gezeigten Betriebsstellung ist die Kolbenstange des Aktors 13 eingefahren. Damit sind die Schneidmesser 7 inaktiv geschaltet, sie befinden sich in ihrer aus dem Förderkanal 4 zurückgezogenen Außerbetriebsstellung. Dieser Betriebszustand könnte ein Erntebetrieb ohne Einsatz der Schneidvorrichtung 5 sein. Dieser Betriebszustand ist aber auch Voraussetzung um im Stillstand der Erntemaschine den Messerträger 6 der Schneidvorrichtung 5, beispielsweise zu Wartungszwecken wie Messerkontrolle oder Schneidmessertausch, in die Wartungsposition außerhalb der Erntemaschine zu verlagern. Dazu ist der Messerträger 6 wie eine Schublade in der Schneidvorrichtung 5 linear verschiebbar mittels Führungsmitteln 10 gelagert.
Das Einfahren der Kolbenstange des Aktors 13 bewirkt gleichzeitig, das der obere Lagerbolzen 19 an der inneren Endlage der Langlochführung der Zuglasche 17 zur Anlage kommt und dann die komplette Fixiereinrichtung 12 parallel zum Aktor 13 in ihre inaktive Stellung verlagert. Das ist in Fig. 2 gut daran zu erkennen, dass das hakenförmige Ende der Klemmlasche 14 keinen Kontakt zu den Führungsmitteln 10 hat.
In die Stellung ist die Fixiereinrichtung 12 völlig wirkungslos. Der Messerträger 6 ist völlig frei in seiner Führung verschiebbar.
Um eine möglichst leichtgängige Verschiebung des Messerträgers 6 zu erreichen, sind die Führungsmittel 10 des Ausführungsbeispiels vorteilhaft als auf Schienen geführte Rollenlager 20 ausgeführt.
Wird die Stelleinrichtung 8 zur Aktivierung der Schneidvorrichtung 5 betätigt, verschwenken die, durch eine nicht dargestellte Vorwahleinrichtung ausgewählten Schneidmesser 6 in die in Fig. 2 erkennbare Schneidposition. Gleichzeitig bewirkt die Ausfahrbewegung der Kolbenstange des Aktors 13 der Stelleinrichtung 8, dass der Lagerbolzen 19 an der äußeren Endlage der Langlochführung der Zuglasche 17 zur Anlage kommt und im weiteren Verfahrweg bis zu seiner Endlage, die Zuglasche 17 und damit die komplette Fixiereinrichtung 12 mitnimmt und dadurch aktiviert.
Durch die Ausfahrbewegung der der Kolbenstange des Aktors 13 wird somit auch die Klemmlasche 14 innerhalb ihrer Langlochführung auf dem Lagerbolzen 15 so weit verlagert, bis die Klemmlasche 14 mit ihrem hakenförmigen Ende an dem ortsfesten Führungsmittel der Schneidvorrichtung 5 zur Anlage kommt.
Unter weiterer Krafteinwirkung durch den Aktor 13 wird der Messerträger 6 innerhalb der Führungsmittel 10 so stark durch die Fixiereinrichtung 12 verspannt, dass der Messerträger 6 in der Schneidvorrichtung 5 spielfrei fixiert ist.
Die Führungsmittel 10 am Messerträger 6 werden dabei so stark gegen die ortsfesten Führungsmittel 10 am Tragrahmen 11 verspannt, dass das notwendigerweise vorhandene Führungsspiel in einer Richtung eliminiert wird.
Erhöhter Verschleiß oder gar Schäden der Führungsmittel 10 werden so wirkungsvoll erfindungsgemäß vermieden, da die Fixiereinrichtung 12 keine Bewegung des Messerträgers innerhalb der Schneidvorrichtung 5 während des Schneidbetriebs zulässt.

Diese konstruktiv sehr einfache Ausführung der Fixiereinrichtung 12 und die geschickt gestaltete Antriebsverbindung mit dem Aktor 13 der Stelleinrichtung 8 für die Schneidmesserschaltung verdeutlichen die besonders erfinderische Lösung der Problemstellung.

## Patentansprüche

1. Schneidvorrichtung für landwirtschaftliche Erntemaschinen, wie Ladewagen oder Ballenpressen zum Ernten von landwirtschaftlichem Halm- oder Blattgut, mit einem Gutaufnehmer (2) und einem mit Förderzinken (9) versehenen und um eine horizontal und quer zur Fahrt- und Arbeitsrichtung ausgerichteten Achse rotierend angetriebenen Förder- und Schneidrotor (3), welcher im Zusammenwirken mit einer Mehrzahl von schwenkbar an einem Messerträger (6) der Schneidvorrichtung (5) gelagerten und in einer Schneidposition in einem Förderkanal (4) hineinragenden Schneidmessern (7) das Erntegut zerkleinert, wobei der zumindest eine Messerträger (6) mit den zugehörigen Schneidmessern (7) in einer sich quer zur Fahrtrichtung erstreckenden Richtung linear beweglich gelagert ist, um in eine Wartungsstellung verlagert werden zu können, **dadurch gekennzeichnet, dass** eine Fixiereinrichtung (12) eingerichtet ist, den Messerträger (6) in einer Betriebsstellung innerhalb der Schneidvorrichtung (5) form- und/oder kraftschlüssig, spielfrei zu fixieren.

2. Schneidvorrichtung (5) nach Anspruch 1, **dadurch gekennzeichnet, dass** die Einwirkung der Fixiereinrichtung (12) die Führungsmittel (10) zur Ermöglichung der linearen Beweglichkeit des Messerträgers (6) von äußeren Belastungen frei macht.

3. Schneidvorrichtung (5) nach Anspruch 1, **dadurch gekennzeichnet, dass** die Einwirkung der Fixiereinrichtung (12) die Führungsmittel (10) zur Ermöglichung der linearen Beweglichkeit des Messerträgers (6) gegeneinander verspannt.

4. Schneidvorrichtung (5) nach zumindest einem der vorhergehenden Ansprüche, **dadurch gekennzeichnet, dass** die Führungsmittel (10) eine Rollenlagerung aufweisen.

5. Schneidvorrichtung (5) nach zumindest einem der vorhergehenden Ansprüche, **dadurch gekennzeichnet, dass** zumindest ein Aktor (13) für die Ausführung einer Betriebsfunktion der Schneidvorrichtung (5) gleichzeitig die Fixiereinrichtung (12) betätigt.

6. Schneidvorrichtung (5) nach Anspruch 5, **dadurch gekennzeichnet, dass** der Aktor (13), der die Schneidmesser (7) in die aktive Schneidstellung verlagert, gleichzeitig die Fixiereinrichtung (12) in die aktive Fixierstellung verbringt.

7. Schneidvorrichtung (5) nach zumindest einem der vorhergehenden Ansprüche, **dadurch gekennzeichnet, dass** der Messerträger (6) immer dann, wenn wenigstens ein Schneidmesser (7) aktiv geschaltet ist, spielfrei innerhalb der Schneidvorrichtung (5) fixiert ist.

8. Erntemaschine, insbesondere Ballenpresse oder Ladewagen, **gekennzeichnet durch** eine Schneidvorrichtung (5) nach einem der Ansprüche 1 bis 7.

## Claims

1. Cutting device for agricultural harvesting machines, such as forage wagons or balers, for harvesting agricultural stalked or leaf crops, comprising a crops collector (2) and conveying and cutting rotor (3) which is provided with conveying tines (9) and driven so as to rotate about an axis which is aligned horizontally and transversely to the travelling and working direction, which rotor, in conjunction with a plurality of cutting blades (7) which are pivotally mounted on a blade carrier (6) of the cutting device (5) and project in a conveyor channel (4) in a cutting position, comminutes the crops, the at least one blade carrier (6) together with the associated cutting knives (7) being mounted so as to be linearly movable in a direction extending transversely to the travelling direction, so that it can be moved into a maintenance position, **characterised in that** a fastening means (12) is designed to fasten the blade carrier (6) in an operating position inside the cutting device (5) in a form-fitting and/or force-fitting manner with zero backlash.

2. Cutting device (5) according to claim 1, **characterised in that** the action of the fastening means (12) frees the guiding means (10) from external stresses in order to allow the linear mobility of the blade carrier (6).

3. Cutting device (5) according to claim 1, **characterised in that** the action of the fastening means (12) braces the guiding means (10) against one another in order to allow the linear mobility of the blade carrier (6).

4. Cutting device (5) according to at least one of the preceding claims, **characterised in that** the guiding means (10) comprise a roller bearing.

5. Cutting device (5) according to at least one of the preceding claims, **characterised in that** at least one actuator (13) for carrying out an operating function of the cutting device (5) simultaneously actuates the fastening means (12).

6. Cutting device (5) according to claim 5, **characterised in that** the actuator (13) which moves the cutting blades (7) into the active cutting position, simultaneously brings the fastening means (12) into the active fastened position.

7. Cutting device (5) according to at least one of the preceding claims, **characterised in that** the blade carrier (6) is fastened inside the cutting device (5) with zero backlash whenever at least one cutting blade (7) is switched to active.

8. Harvesting machine, in particular a baler or a forage wagon, **characterised by** a cutting device (5) according to any of claims 1 to 7.

## Revendications

1. Dispositif de coupe destiné à des moissonneuses agricoles telles que des véhicules chargeurs ou des presses à balles permettant de récolter des produits agricoles en tiges ou en feuilles, comprenant un élément de ramassage des produits (2) ainsi qu'un rotor de convoyage et de coupe (3) équipé de dents de convoyage (9) et entraîné en rotation autour d'un axe orienté horizontalement et transversalement à la direction de déplacement et de travail, qui, effectue un broyage des produits de récolte en coopération avec un ensemble de lames de coupe (7) montées pivotantes sur un porte-lames (6) du dispositif de coupe (5) et faisant saillie dans un canal de convoyage (4) dans la position de coupe, le porte-lames (6) équipé des lames de coupe (7) associé, étant mobile linéairement dans une direction s'étendant transversalement à la direction de déplacement, pour pouvoir être déplacé dans une position d'attente,
**caractérisé en ce qu'**
un dispositif de fixation (12) et susceptible de fixer sans jeu par une liaison par la forme et/ou par la force le porte-lames (6) dans une position de fonctionnement à la partie interne du dispositif de coupe (5).

2. Dispositif de coupe (5) conforme à la revendication 1,
**caractérisé en ce que**
l'action du dispositif de fixation (12) libère des moyens de guidage (10) de contraintes extérieures pour permettre le déplacement linéaire du porte-lames (6).

3. Dispositif de coupe (5) conforme à la revendication 1,
**caractérisé en ce que**
l'action du dispositif de fixation (12) serre les uns contre les autres les moyens de guidage (10) pour permettre le déplacement linéaire du porte-lames (6).

4. Dispositif de coupe (5) conforme à au moins l'une des revendications précédentes,
**caractérisé en ce que**
les moyens de guidage (10) comportent un palier à roulement.

5. Dispositif de coupe (5) conforme à au moins l'une des revendications précédentes,
**caractérisé en ce qu'**
au moins un actionneur (13) permettant la mise en oeuvre d'une fonction de fonctionnement du dispositif de coupe (5) actionne simultanément le dispositif de fixation (12).

6. Dispositif de coupe (5) conforme à la revendication 5,
**caractérisé en ce que**
l'actionneur (13) qui déplace les lames de coupe (7) dans la position de coupe active transfère simultanément le dispositif de fixation (12) dans la position de fixation active.

7. Dispositif de coupe (5) conforme à au moins l'une des revendications précédentes,
**caractérisé en ce que**
le porte-lames (6) est toujours fixé sans jeu à la partie interne du dispositif de coupe (5) lorsqu'au moins une lame de coupe (7) est commutée de façon à être active.

8. Moissonneuse agricole, en particulier presse à balles ou véhicule chargeur,
**caractérisé par**
un dispositif de coupe (5) conforme à l'une des revendications 1 à 7.
